(19) Europäisches Patentamt
European Patent Office
Office européen des brevets

(11) EP 3 922 658 B1

(12) **EUROPEAN PATENT SPECIFICATION**

(45) Date of publication and mention of the grant of the patent:
**30.11.2022 Bulletin 2022/48**

(21) Application number: **20752110.5**

(22) Date of filing: **06.02.2020**

(51) International Patent Classification (IPC):
***C08G 64/16** (2006.01)* ***C08L 69/00** (2006.01)*

(52) Cooperative Patent Classification (CPC):
(C-Sets available)
**C08G 64/307; C08G 64/1608; C08K 5/1345; G02B 1/041** (Cont.)

(86) International application number:
**PCT/JP2020/004522**

(87) International publication number:
**WO 2020/162533 (13.08.2020 Gazette 2020/33)**

(54) **POLYCARBONATE RESIN COMPOSITION AND OPTICAL LENS USING THIS**

POLYCARBONATHARZZUSAMMENSETZUNG UND OPTISCHE LINSE MIT VERWENDUNG DAVON

COMPOSITION DE RÉSINE POLYCARBONATE ET LENTILLE OPTIQUE LA METTANT EN OEUVRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.02.2019 JP 2019021873**

(43) Date of publication of application:
**15.12.2021 Bulletin 2021/50**

(73) Proprietor: **MITSUBISHI GAS CHEMICAL COMPANY, INC.**
**Chiyoda-ku**
**Tokyo 100-8324 (JP)**

(72) Inventors:
- **ISHIHARA Kentaro**
  **Tokyo 100-8324 (JP)**
- **NISHIMORI Katsushi**
  **Tokyo 125-8601 (JP)**
- **KATO Noriyuki**
  **Tokyo 100-8324 (JP)**
- **SUZUKI Shoko**
  **Tokyo 125-8601 (JP)**

(74) Representative: **Hoffmann Eitle**
**Patent- und Rechtsanwälte PartmbB**
**Arabellastraße 30**
**81925 München (DE)**

(56) References cited:

| | |
|---|---|
| **EP-A1- 2 757 394** | **WO-A1-2017/010313** |
| **WO-A1-2019/188702** | **JP-A- H0 873 584** |
| **JP-A- H0 881 549** | **JP-A- 2011 236 336** |
| **JP-A- 2013 076 982** | **JP-A- 2018 184 519** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/1345, C08L 69/00;**
**G02B 1/041, C08L 69/00**

## Description

TECHNICAL FIELD

The present invention relates to a polycarbonate resin composition having well-balanced refractive index and Abbe number, and an optical lens using the same.

BACKGROUND ART

Polycarbonate resin (hereinafter also referred to as "PC") is a polymer formed by connecting divalent phenols with one another via carbonate esters. Among others, since a polycarbonate resin obtained from 2,2-bis(4-hydroxyphenyl)propane (which is commonly known as "bisphenol A") is excellent in transparency and heat resistance and also has excellent mechanical properties such as impact resistance, it has been used in a variety of fields. In the optical field involving various types of lenses, optical disks, etc., the properties of the polycarbonate resin, such as impact resistance, transparency, and low water absorption, have attracted attention, and thus, it has occupied an important place as an optical material.

In particular, in the field of lenses, PC as a thermoplastic resin has attracted attention because of its good productivity, and the demand for PC has been increasing as an alternative for thermosetting resins including CR-39 (diethylene glycol bisallyl carbonate) as a typical example, which had occupied the mainstream of plastic lenses until then.

However, a polycarbonate resin obtained by allowing a carbonate precursor substance such as phosgene or diphenyl carbonate to react with bisphenol A has high refractive index, but has low Abbe number. Hence, this polycarbonate resin is disadvantageous in that it often has a problem regarding chromatic aberration and also has a poor balance between its refractive index and Abbe number. In addition, the polycarbonate resin is also disadvantageous in that it has a high photoelastic constant and the birefringence of a molded product thereof becomes large.

In order to overcome the disadvantages of such a polycarbonate resin, several polycarbonate resins obtained by copolymerization of an aromatic dihydroxy compound and an aliphatic diol have been proposed (Patent Documents 1 to 5). These techniques have been problematic in that the obtained polycarbonate resins still have had low refractive index and low Abbe number, in that a high photoelastic constant has resulted in the large birefringence of a molded product, and in that its insufficient moldability, heat resistance and the like have provided dissatisfactory molded products or have resulted in coloration.

EP2757394 describes a polycarbonate resin composition used for a retardation film insusceptible to color dropout or color shift even under environment of severe temperature or humidity conditions.

PRIOR ART DOCUMENTS

PATENT DOCUMENTS

Patent Document 1: JP Patent Publication (Kokai) No. 1-66234 (1989) A
Patent Document 2: JP Patent Publication (Kokai) No. 10-120777 (1998) A
Patent Document 3: JP Patent Publication (Kokai) No. 11-228683 (1999) A
Patent Document 4: JP Patent Publication (Kokai) No. 11-349676 (1999) A
Patent Document 5: JP Patent Publication (Kokai) No. 2000-63506 A


SUMMARY OF THE INVENTION

PROBLEMS TO BE SOLVED BY THE INVENTION

It is an object of the present invention to solve at least one of the aforementioned problems of the prior art techniques. Moreover, it is another object of the present invention to provide a polycarbonate resin composition having well-balanced refractive index and Abbe number, and an optical lens using the same. Furthermore, it is another object of the present invention to provide a polycarbonate resin composition excellent in heat resistance and molding cycle property, and an optical lens using the same.

MEANS FOR SOLVING THE PROBLEMS

The present inventors have conducted intensive studies, and as a result, the present inventors have found that

at least one of the aforementioned objects can be achieved by using diol compounds having specific structures in combination with one another.

Specifically, the present invention is as follows.

<1> The present invention relates to a polycarbonate resin composition comprising a structural unit represented by the following formula (1), a structural unit represented by the following formula (2), and a structural unit represented by the following general formula (3):

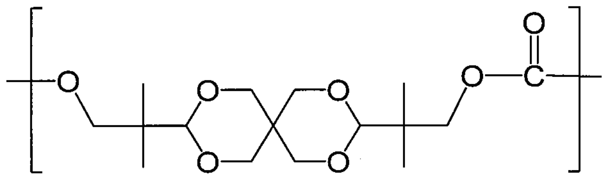

(1)

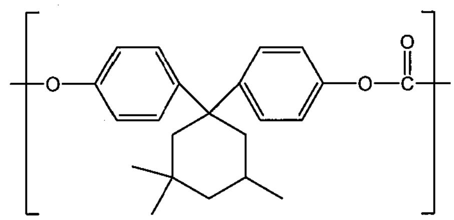

(2)

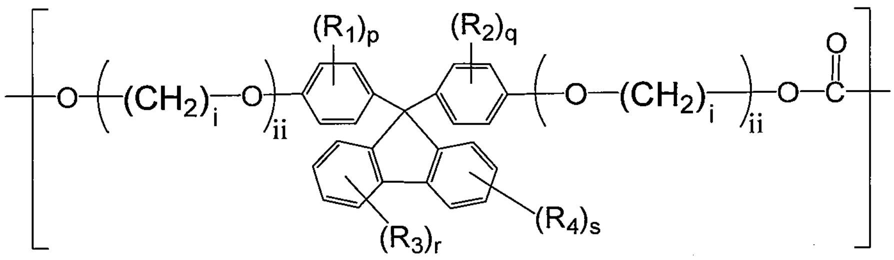

(3)

wherein, in the general formula (3), $R_1$ to $R_4$ each independently represent a hydrogen atom, a fluorine atom, a chlorine atom, a bromine atom, an iodine atom, an alkyl group containing 1 to 6 carbon atoms, or an aryl group containing 6 to 20 carbon atoms which may optionally comprise a heterocyclic atom selected from an oxygen atom, a nitrogen atom and a sulfur atom, an alkenyl group containing 2 to 6 carbon atoms, an alkoxy group containing 1 to 6 carbon atoms or an aralkyl group containing 7 to 17 carbon atoms;
p, q, r and s each independently represent an integer of 0 to 4; and
i represents an integer of 1 to 10, and ii represents an integer of 0 to 10.

<2> The present invention relates to the polycarbonate resin composition according to the above <1>, wherein the antioxidant is comprised in an amount of 0.50% by mass or less in the polycarbonate resin composition.
<3> The present invention relates to the polycarbonate resin composition according to the above <1> or <2>, wherein the antioxidant is comprised in an amount of 0.10% to 0.40% by mass in the polycarbonate resin composition.
<4> The present invention relates to the polycarbonate resin composition according to any one of the above <1> to <3>, wherein the antioxidant is selected from the group consisting of triethylene glycol-bis[3-(3-tert-butyl-5-methyl-4-hydroxyphenyl)propionate], 1,6-hexanediol-bis[3-(3,5-di-tert-butyl-4-hydroxyphenyl)propionate], pentaerythritol-tetrakis[3-(3,5-di-tert-butyl-4-hydroxyphenyl)propionate], octadecyl-3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylenebis(3,5-di-tert-butyl-4-hydroxy-hydrocynnamide), 3,5-di-tert-butyl-4-hydroxy-benzylphosphonate-diethyl ester, tris(3,5-di-tert-butyl-4-hydroxybenzyl)isocyanurate, and 3,9-bis {1,1-dimethyl-2-[β-(3-tert-butyl-4-hydroxy-5 - methylphenyl)propionyloxy] ethyl}-2,4,8,1 0-tetraoxaspiro(5,5)undecane.
<5> The present invention relates to the polycarbonate resin composition according to any one of the above <1>

to <4>, wherein the content of phenol in the polycarbonate resin contained in the polycarbonate resin composition is 0.1 to 3000 ppm.

<6> The present invention relates to the polycarbonate resin composition according to any one of the above <1> to <5>, wherein the content of carbonate diester in the polycarbonate resin contained in the polycarbonate resin composition is 0.1 to 1000 ppm.

<7> The present invention relates to the polycarbonate resin composition according to any one of the above <1> to <6>, wherein (the structural unit (mole) represented by the formula (1)) / (the structural unit (mole) represented by the formula (1) + the structural unit (mole) represented by the formula (2) + the structural unit (mole) represented by the general formula (3)) × 100 is 8 to 32 mol%.

<8> The present invention relates to the polycarbonate resin composition according to any one of the above <1> to <7>, wherein (the structural unit (mole) represented by the formula (2)) / (the structural unit (mole) represented by the formula (1) + the structural unit (mole) represented by the formula (2) + the structural unit (mole) represented by the general formula (3)) × 100 is 28 to 52 mol%.

<9> The present invention relates to the polycarbonate resin composition according to any one of the above <1> to <8>, wherein (the structural unit (mole) represented by the general formula (3)) / (the structural unit (mole) represented by the formula (1) + the structural unit (mole) represented by the formula (2) + the structural unit (mole) represented by the general formula (3)) × 100 is 28 to 52 mol%.

<10> The present invention relates to the polycarbonate resin composition according to any one of the above <1> to <9>, wherein the structural unit represented by the general formula (3) is:

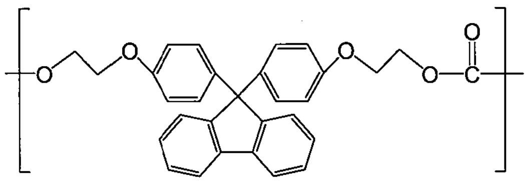

or

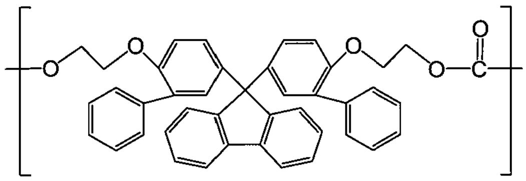

<11> The present invention relates to the polycarbonate resin composition according to any one of the above <1> to <10>, wherein the glass transition temperature (Tg) is 140°C to 200°C.

<12> The present invention relates to the polycarbonate resin composition according to any one of the above <1> to <11>, wherein the refractive index (nD) is 1.565 to 1.600 and the Abbe number (v) is 26 to 32.

<13> The present invention relates to the polycarbonate resin composition according to any one of the above <1> to <12>, wherein the refractive index (nD) and the Abbe number (v) satisfy the following relational expression:

$$-0.0130\ \nu + 1.9480 < nD < -0.0130\ \nu + 1.9900.$$

<14> The present invention relates to the polycarbonate resin composition according to any one of the above <1> to <13>, wherein the weight average molecular weight (Mw) is 10,000 to 70,000.

<15> The present invention relates to an optical lens comprising the polycarbonate resin composition according to any one of the above <1> to <14>.

<16> The present invention relates to the optical lens according to the above <15>, which has a thickness of 0.01 to 30 mm.

## ADVANTAGEOUS EFFECT OF THE INVENTION

According to the present invention, a polycarbonate resin composition having well-balanced refractive index and Abbe number is obtained, and in particular, a polycarbonate resin composition having favorable heat resistance and favorable molding cycle property at a specific copolymerization ratio can be obtained. The polycarbonate resin composition of the present invention is most suitable for optical lenses.

## BRIEF DESCRIPTION OF THE DRAWINGS

[Figure 1] Figure 1 is a graph showing the relationship between the Abbe number and the refractive index in each of the polycarbonate resin compositions obtained in Examples and Comparative Examples.

EMBODIMENTS FOR CARRYING OUT THE INVENTION

Hereinafter, the present invention will be described in detail.

< Polycarbonate resin composition >

The polycarbonate resin composition of the present invention comprises, at least, a polycarbonate resin comprising a structural unit represented by the above formula (1), a structural unit represented by the above formula (2), and a structural unit represented by the above general formula (3). These structural units are derived from a diol compound represented by the following formula (1'), a diol compound represented by the following formula (2'), and a diol compound represented by the following general formula (3'), respectively.

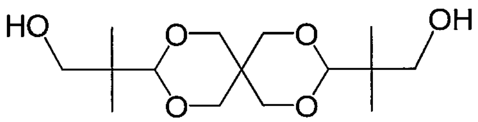

(1')

Herein, the diol compound represented by the above formula (1') is a diol compound that is referred to as SPG (spiroglycol: 3,9-bis(1,1-dimethyl-2-hydroxyethyl)-2,4,8,10-tetraoxaspiro[5.5]undecane), and in the present invention, either a commercially available product or a synthesized product may be used as SPG.

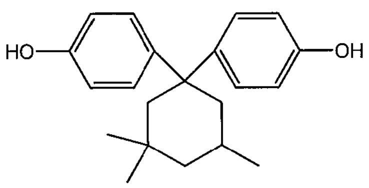

(2')

Herein, the diol compound represented by the above formula (2') is a diol compound that is referred to as Bis-TMC (1,1-bis(4-hydroxyphenyl)-3,3,5-trimethylcyclohexane), and in the present invention, either a commercially available product or a synthesized product may be used as Bis-TMC.

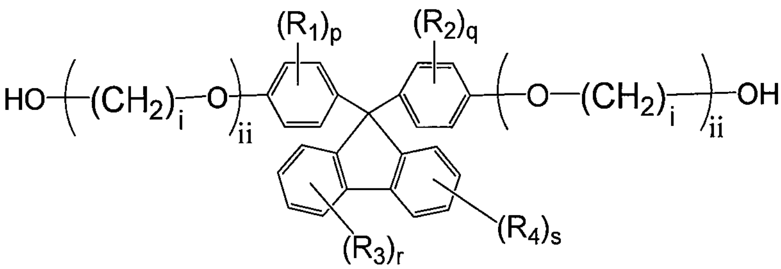

(3')

In the above general formula (3'), $R_1$ to $R_4$ each independently represent a hydrogen atom, a fluorine atom, a chlorine atom, a bromine atom, an iodine atom, an alkyl group containing 1 to 6 carbon atoms, or an aryl group containing 6 to 20 carbon atoms which may optionally comprise a heterocyclic atom selected from an oxygen atom, a nitrogen atom and a sulfur atom, an alkenyl group containing 2 to 6 carbon atoms, an alkoxy group containing 1 to 6 carbon atoms or an aralkyl group containing 7 to 17 carbon atoms. Preferably, $R_1$ and $R_2$ each independently represent a hydrogen atom, a methyl group, an ethyl group, or a phenyl group, and $R_3$ and $R_4$ each independently represent a hydrogen atom or a phenyl group.

In the above general formula (3'), p, q, r and s each independently represent an integer of 0 to 4, and preferably, p and q represent 1, and r and s represent 0.

In the above general formula (3'), i represents an integer of 1 to 10, preferably an integer of 1 to 4, and more preferably 2.

In the above general formula (3'), ii represents an integer of 0 to 10, preferably an integer of 1 to 3, and more preferably 1.

In one embodiment of the present invention, the structural unit represented by the above general formula (3)

is preferably:

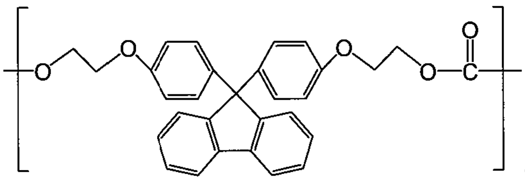

or

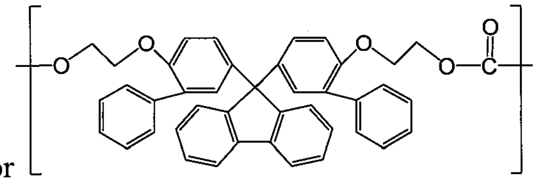

This is preferable because there is a good balance between the refractive index and the Abbe number, when the polycarbonate resin composition is used as an optical lens.

The above structural units are derived from BPEF (9,9-bis[4-(2-hydroxyethoxy)phenyl]fluorene) represented by the following structural formula and BPPEF (9,9-bis[4-(2-hydroxyethoxy)-3-phenylphenyl]fluorene) represented by the following structural formula, respectively. In the present invention, either commercially available products or synthesized products may be used as BPEF and BPPEF.

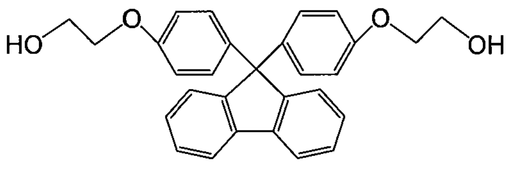

BPEF

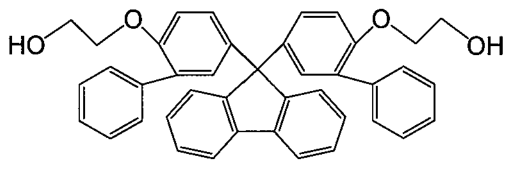

BPPEF

In one embodiment of the present invention, with regard to the ratio of the structural unit represented by the above formula (1), (the structural unit (mole) represented by the formula (1)) / (the structural unit (mole) represented by the formula (1) + the structural unit (mole) represented by the formula (2) + the structural unit (mole) represented by the general formula (3)) × 100 is preferably 8 to 32 mol%, more preferably 10 to 30 mol%, and particularly preferably 15 to 25 mol%.

Moreover, with regard to the ratio of the structural unit represented by the above formula (2), (the structural unit (mole) represented by the formula (2)) / (the structural unit (mole) represented by the formula (1) + the structural unit (mole) represented by the formula (2) + the structural unit (mole) represented by the general formula (3)) × 100 is preferably 28 to 52 mol%, more preferably 30 to 48 mol%, and particularly preferably 33 to 42 mol%.

Furthermore, with regard to the ratio of the structural unit represented by the above formula (3), (the structural unit (mole) represented by the general formula (3)) / (the structural unit (mole) represented by the formula (1) + the structural unit (mole) represented by the formula (2) + the structural unit (mole) represented by the general formula (3)) × 100 is preferably 28 to 52 mol%, more preferably 32 to 50 mol%, and particularly preferably 38 to 48 mol%.

By applying the above-described copolymerization ratio, a polycarbonate resin composition having favorable heat resistance and favorable molding cycle property can be obtained.

The polycarbonate resin used in the polycarbonate resin composition of the present invention may be a ternary resin that is produced using, as monomers, the diol compound represented by the above formula (1'), the diol compound represented by the above formula (2'), and the diol compound represented by the above general formula (3'). Otherwise, the present polycarbonate resin may also comprise a diol compound other than the aforementioned diol compounds. Examples of such another diol compound may include, but are not limited to:

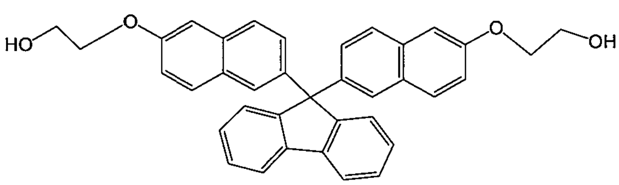

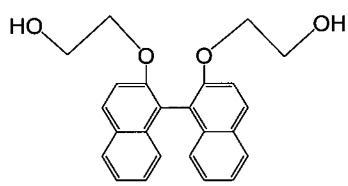

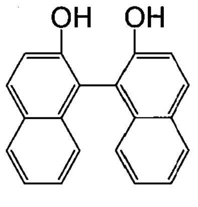

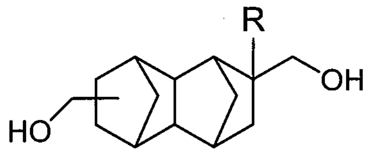

(wherein R represents hydrogen, a methyl group, or an ethyl group)

4,4'-biphenyldiol, bis(4-hydroxyphenyl)methane, bis(2-hydroxyphenyl)methane, 2,4'-dihydroxydiphenylmethane, bis(4-hydroxyphenyl)ether, bis(4-hydroxyphenyl)sulfone, 2,4'-dihydroxydiphenylsulfone, bis(2-hydroxyphenyl)sulfone, bis(4-hydroxy-3 - methylphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, 1,1 -bis(4-hydroxyphenyl)-1-phenyl ethane, bis(4-hydroxyphenyl)diphenylmethane, 2,2-bis(4-hydroxyphenyl)propane, 2,2-bis(4-hydroxy-3-methylphenyl)propane, 1,1-bis(4-hydroxy-3-methylphenyl)ethane, bis(4-hydroxy-3-methylphenyl)methane, 2,2-bis(4-hydroxy-3-t-butylphenyl)propane, 2,2-bis(4-hydroxyphenyl)butane, 1,1-bis(4-hydroxyphenyl)cyclohexane, 1,1-bis(4-hydroxy-3-methylphenyl)cyclohexane, 1,1-bis(4-hydroxyphenyl)cycloundecane, 1,1-bis(4-hydroxyphenyl)cyclododecane, 2,2-bis(4-hydroxy-3-allylphenyl)propane, 3,3,5-trimethyl-1,1-bis(4-hydroxyphenyl)cyclohexane, α,ω-bis[3-(o-hydroxyphenyl)propyl]polydimethyldiphenyl random copolymerized siloxane, α,ω-bis[3-(o-hydroxyphenyl)propyl]polydimethylsiloxane, 4,4'-[1,4-phenylenebis(1 -methylethylidene)]bisphenol, 4,4'-[1,3-phenylenebis(1-methylethylidene)]bisphenol, 1,3-adamantanediol, 2,2-bis(4-hydroxyphenyl)butane, 1,1-bis(4-hydroxyphenyl)-2-ethylhexane, 1,1-bis(4-hydroxyphenyl)-2-methylpropane, 2,2-bis(4-hydroxyphenyl)-4-methylpentane, 1,1-bis(4-hydroxyphenyl)decane, 1,3-bis(4-hydroxyphenyl)-5,7-dimethyladamantane, 2,2-bis(4-(2-hydroxyethoxy)phenyl)propane, 4, 4-bis(2-hydroxyethoxy)biphenyl, 2,2'-(1,4-phenylene)bis(ethan-1-ol), 2,2'-(1,4-phenylene)bis(methane-1-ol), 2,2'-(1 ,4-phenylenebis(oxy))bis(ethan-1-ol), 1,1-bis(4-hydroxyphenyl)cyclododecane, 1,1-bis(4-hydroxy-3-methylphenyl)cyclododecane, 1,1-bis(4-hydroxy-3-phenylphenyl)cyclododecane, 1,1-bis(4-hydroxy-3-t-butylphenyl)cyclododecane, 1,1-bis(4-hydroxy-3-sec-butylphenyl)cyclododecane, 1,1-bis(4-hydroxy-3-allylphenyl)cyclododecane, 1,1-bis(4-hydroxy-3,5-dimethylphenyl)cyclododecane, 1,1-bis(4-hydroxy-3-fluorophenyl)cyclododecane, 1,1-bis(4-hydroxy-3-chlorophenyl)cyclododecane, 1,1-bis(4-hydroxy-3 - bromophenyl)cyclododecane, 7-ethyl-1,1-bis(4-hydroxyphenyl)cyclododecane, 5,6-dimethyl-1,1-bis(4-hydroxyphenyl)cyclododecane, pentacyclopentadecanedimethanol, 1,4-cyclohexanedimethanol, 1,3-adamantanedimethanol, dekalin-2,6-dimethanol, tricyclodecane, dimethanol fluorene glycol, fluorene diethanol, and isosorbide. The above-described another diol compound is preferably 2,2-bis(4-hydroxyphenyl)propane. The additive amount of the above-described another diol compound can be adjusted, as appropriate, within a range that does not impair the effects of the present invention.

In one embodiment of the present invention, the polycarbonate resin composition may comprise any of a random copolymer structure, a block copolymer structure, and an alternating copolymer structure.

In one embodiment of the present invention, the weight average molecular weight (Mw) relative to polystyrene standard of the polycarbonate resin composition may be preferably 10,000 to 70,000. The weight average molecular weight (Mw) relative to polystyrene standard of the polycarbonate resin composition is more preferably 20,000 to 50,000, and particularly preferably 30,000 to 45,000. By setting the weight average molecular weight (Mw) relative to polystyrene standard of the polycarbonate resin composition within the above-described range, a molded body can be prevented from becoming fragile, and the removal of a resin after production can be facilitated by preventing melt viscosity from becoming excessively high, and further, fluidity is improved and injection molding in a melted state can be facilitated.

In another embodiment of the present invention, another resin is blended with the above-described polycarbonate resin in the polycarbonate resin composition, and the thus mixed resin can be used in production of an optical lens. Examples of such another resin may include, but are not limited to, polyester carbonate, polyamide, polyacetal, modified polyphenylene ether, and polyester (for example, polyethylene terephthalate and polybutylene terephthalate).

(Other components)

In one embodiment of the present invention, the polycarbonate resin composition may comprise, as additives, an antioxidant and a release agent.

Examples of the antioxidant may include triethylene glycol-bis[3-(3-tert-butyl-5-methyl-4-hydroxyphenyl)propionate], 1,6-hexanediol-bis[3-(3,5-di-tert-butyl-4-hydroxyphenyl)propionate], pentaerythritol-tetrakis[3-(3,5-di-tert-butyl-4-hydroxyphenyl)propionate], octadecyl-3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylenebis(3,5-di-tert-butyl-4-hydroxy-hydrocynnamide), 3,5-di-tert-butyl-4-hydroxy-benzylphosphonate-diethyl ester, tris(3,5-di-tert-butyl-4-hydroxybenzyl)isocyanurate, and 3,9-bis{1,1-dimethyl-2-[β-(3-tert-butyl-4-hydroxy-5-methylphenyl)propionyloxy]ethyl}-2,4,8,10-tetraoxaspiro(5,5)undecane.

The content of the antioxidant is preferably 0.50% by mass or less, more preferably 0.05% to 0.40% by mass,

further preferably 0.05% to 0.20% by mass or 0.10% to 0.40% by mass, and particularly preferably 0.20% to 0.40% by mass, in the polycarbonate resin composition.

The release agent is preferably an agent whose 90% by weight or more consists of an ester of alcohol and fatty acid. Specific examples of the ester of alcohol and fatty acid may include an ester of monohydric alcohol and fatty acid, and partial esters or all esters of polyhydric alcohol and fatty acid. The above-described ester of monohydric alcohol and fatty acid is preferably an ester of monohydric alcohol having 1 to 20 carbon atoms and saturated fatty acid having 10 to 30 carbon atoms. On the other hand, the above-described partial esters or all esters of polyhydric alcohol and fatty acid are preferably partial esters or all esters of polyhydric alcohol having 1 to 25 carbon atoms and saturated fatty acid having 10 to 30 carbon atoms.

Specific examples of the ester of monohydric alcohol and saturated fatty acid may include stearyl stearate, palmityl palmitate, butyl stearate, methyl laurate, and isopropyl palmitate. Examples of the partial esters or all esters of polyhydric alcohol and saturated fatty acid may include all esters or partial esters of dipentaerythritols, such as stearic acid monoglyceride, stearic acid monoglyceride, stearic acid diglyceride, stearic acid triglyceride, monosorbitate stearate, behenic acid monoglyceride, capric acid monoglyceride, lauric acid monoglyceride, pentaerythritol monostearate, pentaerythritol tetrastearate, pentaerythritol tetrapelargonate, propylene glycol monostearate, biphenyl biphenate, sorbitan monostearate, 2-ethylhexyl stearate, and dipentaerythritol hexastearate.

The content of the above-described release agent is preferably 0.50% by mass or less, more preferably 0.01% to 0.10% by mass, further preferably 0.02% to 0.05% by mass, and particularly preferably 0.03% to 0.05% by mass, in the polycarbonate resin composition.

Moreover, other additives such as a processing stabilizer, an ultraviolet absorber, a fluidity modifier, a crystal nucleating agent, a strengthening agent, a dye, an antistatic agent, a blueing agent, and an antibacterial agent may be added to the polycarbonate resin composition of the present invention.

(Impurities)

In the polycarbonate resin of the present invention, phenols generated upon the production, and diols or carbonate diesters that are monomers remaining without reacting may be present as impurities. The content of the phenols in the polycarbonate resin is preferably 0.1 to 3000 ppm, more preferably 0.1 to 2000 ppm, and particularly preferably 1 to 1000 ppm, 1 to 800 ppm, 1 to 500 ppm, or 1 to 300 ppm. The content of the diols in the polycarbonate resin is preferably 0.1 to 5000 ppm, more preferably 1 to 3000 ppm, further preferably 1 to 1000 ppm, and particularly preferably 1 to 500 ppm. In addition, the content of the carbonate diesters in the polycarbonate resin is preferably 0.1 to 1000 ppm, more preferably 0.1 to 500 ppm, and particularly preferably 1 to 100 ppm. By adjusting the amounts of the phenols and the carbonate diesters contained in the polycarbonate resin, a resin having physical properties that are suitable for purpose can be obtained. The contents of the phenols and the carbonate diesters can be adjusted, as appropriate, by changing conditions or devices applied to polycondensation. Moreover, the contents of the phenols and the carbonate diesters can also be adjusted by changing conditions for an extrusion step performed after the polycondensation.

If the contents of the phenols or carbonate diesters exceed the above-described range, problems such as a reduction in the strength of the obtained resin molded body or generation of odor may occur. On the other hand, if the contents of the phenols or carbonate diesters are lower than the above-described range, plasticity is likely to decrease upon the melting of the resin.

< Method for producing polycarbonate resin composition >

In one embodiment of the present invention, the polycarbonate resin can be produced according to the method described in WO2018/016516. Specifically, the polycarbonate resin can be produced by allowing the diol compound represented by the above formula (1'), the diol compound represented by the above formula (2') and the diol compound represented by the above general formula (3') to react with a carbonate precursor substance such as carbonate diester, in the presence or absence of a basic compound catalyst and/or a transesterification catalyst under heating, and further, under normal pressure or reduced pressure, according to a melt polycondensation method. The production method of the polycarbonate resin composition of the present invention is not limited to the above-described production method.

< Physical properties of polycarbonate resin composition >

(A) Refractive index (nD)

In one embodiment of the present invention, the refractive index at a wavelength of 587.6 nm at 23°C of the polycarbonate resin composition is preferably 1.565 to 1.600, more preferably 1.585 to 1.600, and particularly preferably 1.585 to 1.590. The polycarbonate resin composition of the present invention has a high refractive index, and thus, the

present polycarbonate resin composition is suitable as a material for optical lenses. The refractive index can be measured in accordance with JIS-K-7142: 2014, using an Abbe's refractometer.

(B) Abbe number (ν)

In one embodiment of the present invention, the Abbe number at 23°C of the polycarbonate resin composition is preferably 26 to 32, more preferably 27 to 31, and particularly preferably 28 to 30. The Abbe number can be measured using an Abbe's refractometer and can be calculated according to the method as described in Examples later.

In one embodiment of the present invention, the refractive index (nD) and the Abbe number (ν) of the polycarbonate resin composition preferably satisfy the following relational expression:

$$-0.0130\ \nu + 1.9480 < nD < -0.0130\ \nu + 1.9900$$

More preferably, the refractive index (nD) and the Abbe number (ν) satisfy the following relational expression:

$$-0.0130\ \nu + 1.9480 < nD < -0.0065\ \nu + 1.7785$$

By satisfying such relational expressions, the refractive index and the Abbe number preferably have a well-balanced relationship.

(C) Glass transition temperature (Tg)

In one embodiment of the present invention, the glass transition temperature (Tg) of the polycarbonate resin composition is preferably 140°C to 200°C, more preferably 145°C to 160°C, and particularly preferably 150°C to 160°C. If the glass transition temperature (Tg) of the polycarbonate resin composition is within the above-described range, it is convenient for injection molding. If Tg is lower than 140°C, the operating temperature range is unfavorably narrowed. On the other hand, if Tg exceeds 200°C, the melting temperature of the resin becomes high, and decomposition of the resin or coloration unfavorably easily occurs. If the glass transition temperature of the resin is too high, it causes a significant difference between a mold temperature and the glass transition temperature of the resin, while using a versatile mold temperature controller. Thus, in the intended use in which a product is required to have strict surface accuracy, the use of a resin having an excessively high glass transition temperature is difficult and is also unfavorable.

(D) Other properties

The polycarbonate resin composition of the present invention has high moisture resistance. The moisture resistance can be evaluated by performing a "PCT test" (pressure cooker test) on an optical molded body obtained using the polycarbonate resin composition, and then measuring the total light transmittance of the optical molded body after completion of the test. The PCT test can be carried out by retaining an injection molded body having a diameter of 50 mm and a thickness of 3 mm obtained by the method as described in Examples later, under conditions of 120°C, 0.2 Mpa, 100% RH, and 20 hours. The total light transmittance of the polycarbonate resin composition of the present invention after completion of the PCT test is preferably 60% or more, more preferably 70% or more, further preferably 75% or more, and particularly preferably 80% or more. If the present polycarbonate resin has a total light transmittance of 60% or more, it is said that the present polycarbonate resin has higher moisture resistance than conventional polycarbonate resins. It is to be noted that the total light transmittance can be measured according to the method as described in Examples later.

The b value of the polycarbonate resin composition of the present invention is preferably 5 or less. As the b value decreases, it means that the yellowish color becomes weak, and the hue becomes favorable. It is to be noted that the b value can be measured according to the method as described in Examples later.

The residual amount of phenols contained in the polycarbonate resin composition of the present invention is preferably 500 ppm or less, more preferably 300 ppm or less, further preferably 150 ppm or less, and particularly preferably 50 ppm or less. Besides, it is considered that such residual phenols that are somewhat contained in the present polycarbonate resin are advantageous in that thermoplasticity increases, or in that the residual phenols provide antibacterial action.

The residual amount of diphenyl carbonate (DPC) contained in the polycarbonate resin composition of the present invention is preferably 200 ppm or less, more preferably 150 ppm or less, further preferably 100 ppm or less, and particularly preferably 50 ppm or less. Besides, it is considered that such residual diphenyl carbonate (DPC) that is

somewhat contained in the present polycarbonate resin is advantageous in that it can prevent hydrolysis upon melt molding.

< Optical lens >

The optical lens of the present invention can be obtained by injection molding the aforementioned polycarbonate resin composition of the present invention into the shape of a lens, using an injection molding machine or an injection compression molding machine. In one embodiment of the present invention, the optical lens can be produced according to the method described in WO2018/016516. Molding conditions for the injection molding are not particularly limited, but the molding temperature is preferably 180°C to 300°C, and more preferably 180°C to 290°C. In addition, the injection pressure is preferably 50 to 1700 kg/cm$^2$.

In order to avoid the mixing of foreign matters into the optical lens, the molding environment must be naturally a low-dust environment, and the class is preferably 1000 or less, and more preferably 100 or less.

The optical lens of the present invention is preferably used in the shape of an aspherical lens, as necessary. Since the aspherical lens can reduce spherical aberration to substantially zero with a single lens thereof, it is not necessary to eliminate the spherical aberration by a combination of a plurality of spherical lenses, and thereby, it becomes possible to achieve weight saving and a reduction in production costs. Therefore, among the optical lenses, the aspherical lens is particularly useful as a camera lens. The astigmatism of the aspherical lens is preferably 0 to 15 m$\lambda$, and more preferably 0 to 10 m$\lambda$.

The thickness of the optical lens of the present invention can be set to be in a wide range depending on intended use, and is not particularly limited. The thickness of the present optical lens is preferably 0.01 to 30 mm, and more preferably 0.1 to 15 mm. A coating layer, such as an antireflection layer or a hard coating layer, may be established on the surface of the optical lens of the present invention, as necessary. The antireflection layer may be either a single layer or a multilayer, or may also be either an organic matter or an inorganic matter. The antireflection layer is preferably an inorganic matter. Specific examples may include oxides or fluorides, such as silicon oxide, aluminum oxide, zirconium oxide, titanium oxide, cerium oxide, magnesium oxide, or magnesium fluoride. Among these, silicon oxide and zirconium oxide are more preferable, and a combination of silicon oxide and zirconium oxide is further preferable. Moreover, the antireflection layer is not particularly limited in terms of a combination of a single layer/a multilayer, components constituting the layers, a combination of the thicknesses of the layers, etc. Two-layer configuration or three-layer configuration is preferable, and three-layer configuration is particularly preferable. Furthermore, the antireflection layer as a whole may be formed to a thickness that is 0.00017% to 3.3%, based on the thickness of the optical lens, and specifically, to a thickness of 0.05 to 3 $\mu$m, and particularly preferably 1 to 2 $\mu$m.

EXAMPLES

Hereinafter, the present invention will be described in the following examples. However, these examples are not intended to limit the scope of the present invention.

< Refractive index (nD) >

With regard to a film with a thickness of 0.1 mm, consisting of the polycarbonate resin obtained below, the refractive index (nD) of the film at a wavelength of 587.6 nm and at 23°C was measured according to the method of JIS-K-7142: 2014, using an Abbe's refractometer. The 0.1-mm film was obtained by press molding.

< Abbe number (v) >

With regard to a film with a thickness of 0.1 mm, consisting of the polycarbonate resin obtained below, the refractive indexes (nD) of the film at 23°C and at wavelengths of 486 nm, 587.6 nm and 656 nm were measured using an Abbe's refractometer. Thereafter, the Abbe number (v) was calculated according to the following equation. The 0.1-mm film was obtained by press molding.

$$\nu = (nD-1) / (nF-nC)$$

nD: Refractive index at wavelength of 587.6 nm
nC: Refractive index at wavelength of 656 nm
nF: Refractive index at wavelength of 486 nm

< Glass transition temperature (Tg) >

The glass transition temperature (Tg) was measured using a differential scanning calorimeter (DSC). The following specific conditions were applied.

Device: Hitachi High-Tech Science DSC7000X
Amount of sample: 5 mg
Atmosphere: under nitrogen gas atmosphere
Temperature rise conditions: 10°C/min

< Weight average molecular weight (Mw) >

The weight average molecular weight (Mw) relative to polystyrene standard was obtained from the previously produced calibration curve of standard polystyrene. That is to say, standard polystyrene (manufactured by Tosoh Corporation, "PStQuick MP-M") whose molecular weight had been known (molecular weight distribution = 1) was used to produce a calibration curve. From the measured standard polystyrene, the elution time and the molecular weight value of each peak were plotted, and approximation was performed with a cubic equation to obtain a calibration curve. Mw was obtained according to the following equation:

$$Mw = \Sigma(Wi \times Mi) / \Sigma(Wi).$$

In this equation, i indicates an $i^{th}$ dividing point when the molecular weight M was divided; Wi indicates an $i^{th}$ weight; and Mi indicates an $i^{th}$ molecular weight. Moreover, the molecular weight M indicates the value of the molecular weight of polystyrene at the same elution time in the calibration curve. As a GPC apparatus, HLC-8320GPC manufactured by Tosoh Corporation was used. A single column of TSKguardcolumn SuperMPHZ-M was used as a guard column, and a TSKgel SuperMultiporeHZ-M column line consisting of three columns connected in series was used as an analysis column. Other conditions are as follows.

Solvent: Tetrahydrofuran, HPLC grade
Amount injected: 10 μL
Sample concentration: 0.2 w/v % Chloroform solution, HPLC grade
Solvent flow rate: 0.35 ml/min
Measurement temperature: 40°C
Detector: RI

< Heat resistance test >

The polycarbonate resin obtained below was subjected to vacuum drying at 120°C for 4 hours, and was then subjected to injection molding using an injection molding machine (FANUC ROBOSHOT α-S30iA) at a cylinder temperature of 270°C and at a mold temperature of Tg -10°C, so as to obtain a plate. Subsequently, the plate was heated at Tg -20°C for 4 hours, and was then left at rest at 25°C for 24 hours, so as to obtain a disk-shaped plate test piece having a diameter of 50.00 mm and a thickness of 3 mm. The disk-shaped plate test piece was left at rest in the air at 125°C for 1000 hours, and thereafter, the diameter of the test piece was measured. The heat resistance of each test piece was evaluated in accordance with the following criteria.

Heat resistance A: the disk-shaped plate having a diameter of 49.9 mm or more and 50.00 mm or less
Heat resistance B: the disk-shaped plate having a diameter of 49.8 mm or more and less than 49.9 mm
Heat resistance C: the disk-shaped plate having a diameter of less than 49.8 mm

< Molding cycle property test >

The polycarbonate resin obtained below was subjected to vacuum drying at 120°C for 4 hours, and was then subjected to injection molding using an injection molding machine (FANUC ROBOSHOT α-S30iA) at a cylinder temperature of 270°C and at a mold temperature of Tg -10°C. The molding cycle and the crack of the obtained molded product or adhesion thereof to the mold were confirmed by visual observation. The molding cycle property of each molded product was evaluated in accordance with the following criteria.

Molding cycle property A: A molding cycle of 20 seconds is possible. Neither crack of a molded product nor

adhesion to the mold occurs.

Molding cycle property B: Crack of a molded product or adhesion to the mold occurs upon the molding, when the molding cycle is set at 20 seconds. A molding cycle of 30 seconds is possible.

Molding cycle property C: Molding is impossible, when the molding cycle is set at 20 seconds. Even when the molding cycle is set at 30 seconds, crack of a molded product or adhesion to the mold occurs upon the molding.

< Measurement of amounts of phenol (PhOH) and diphenyl carbonate (DPC) in polycarbonate resin >

The polycarbonate resin (0.5 g) obtained below was dissolved in 50 mL of tetrahydrofuran (THF) to prepare a sample solution. As samples of phenol and diphenyl carbonate, commercially available phenol and diphenyl carbonate were each distilled, and from the obtained pure products, the calibration curves of phenol and diphenyl carbonate were produced. Then, the sample solution (2 μL) was quantified by LC-MS under the following measurement conditions. It is to be noted that the detection limit value under these measurement conditions was 0.01 ppm (mass ratio).
LC-MS measurement conditions:
Measurement device (LC part): Agilent Infinity 1260 LC System
Column: ZORBAX Eclipse XDB-18, and guard cartridge
Mobile phase:

A: 0.01 mol/L ammonium acetate in aqueous solution
B: 0.01 mol/L ammonium acetate in methanol solution
C: THF

Gradient program of mobile phase:
As shown in the following Table 1, the mixture of the above A to C was used as a mobile phase. While the composition of the mobile phase was changed when the period of time shown in the column "Time (min)" passed, the mobile phase was flown into the column for 30 minutes.

[Table 1]

| Time (min) | Composition of mobile phase (vol. %) | | |
|---|---|---|---|
| | A | B | C |
| 0 | 10 | 75 | 15 |
| 10.0 | 9 | 67.5 | 23.5 |
| 10.1 | 0 | 25 | 75 |
| 30.0 | 0 | 25 | 75 |

Flow rate: 0.3 mL/min
Column temperature: 45°C
Detector: UV (225 nm)
Measurement device (MS part): Agilent 6120 single quad LCMS System
Ionization source: ESI
Polarity: Positive (DPC) & Negative (PhOH)
Fragmenter: 70 V
Dry gas: 10 L/min, 350°C
Nebulizer: 50 psi
Capillary voltage: 3000 V (Positive), 2500 V (Negative)
Measurement ion:

[Table 2]

| Monomer | Ion species | m/z |
|---|---|---|
| PhOH | $[M-H]^-$ | 93.1 |

(continued)

| Monomer | Ion species | m/z |
|---|---|---|
| DPC | $[M+NH_4]^+$ | 232.1 |
| Amount of sample injected: 2 μL | | |

< Total light transmittance after PCT test >

The polycarbonate resin obtained below was subjected to vacuum drying at 120°C for 4 hours, and was then subjected to injection molding using an injection molding machine (FANUC ROBOSHOT α-S30iA) at a cylinder temperature of 270°C and at a mold temperature of Tg -10°C, so as to obtain a disk-shaped test plate piece having a diameter of 50 mm and a thickness of 3 mm. A PCT test was carried out by retaining the obtained plate piece having a diameter of 50 mm and a thickness of 3 mm under conditions of 120°C, 0.2 Mpa, 100% RH, and 20 hours. The total light transmittance of the plate piece after this PCT test was measured in accordance with former JIS K7105, using a turbidity meter (MODEL 1001DP, manufactured by NIPPON DENSHOKU INDUSTRIES Co., Ltd.).

< b Value >

The polycarbonate resin obtained below was subjected to vacuum drying at 120°C for 4 hours, and was then subjected to injection molding using an injection molding machine (FANUC ROBOSHOT α-S30iA) at a cylinder temperature of 270°C and at a mold temperature of Tg -10°C, so as to obtain a disk-shaped test plate piece having a diameter of 50 mm and a thickness of 3 mm. Using the obtained plate piece, the b value thereof was measured in accordance with former JIS K7105, using an SE2000-type spectral color difference meter, manufactured by NIPPON DENSHOKU INDUSTRIES Co., Ltd. As the b value decreases, it means that the yellowish color becomes weak, and the hue becomes favorable.

(Example 1)

Raw materials, namely, 0.30 mol of SPG (spiroglycol: 3,9-bis(1,1-dimethyl-2-hydroxyethyl)-2,4,8,10-tetraoxaspiro[5.5]undecane) represented by the following structural formula, 0.41 mol of Bis-TMC (1,1-bis(4-hydroxyphenyl)-3,3,5-trimethylcyclohexane) represented by the following structural formula, 0.29 mol of BPEF (9,9-bis[4-(2-hydroxyethoxy)phenyl]fluorene) represented by the following structural formula, 1.15 mol of DPC (diphenyl carbonate), and 1 $\times 10^{-5}$ mol of sodium hydrogen carbonate were placed in a 2-L reactor equipped with a stirrer and a distillation device, and were then heated to 180°C under a 760 mmHg nitrogen atmosphere. Ten minutes after initiation of the heating, it was confirmed that the raw materials were completely dissolved, and the resultant was further stirred under the same conditions as those described above for 110 minutes. Thereafter, the degree of pressure reduction was adjusted to 200 mmHg, and at the same time, the temperature was increased to 200°C at a rate of 60°C/hr. At this time, it was confirmed that phenol generated as a by-product started to be distillated. Thereafter, while the temperature was retained 200°C for 20 minutes, the reaction was carried out. Thereafter, the temperature was further increased to 230°C at a rate of 75°C/hr, and 10 minutes after termination of the temperature rise, the degree of pressure reduction was decreased to be 1 mmHg or less over 1 hour, while the reaction product was retained at the aforementioned temperature. Thereafter, the temperature was increased to 245°C at a rate of 60°C/hr, and then, the reaction product was further stirred for 30 minutes. After completion of the reaction, nitrogen was introduced into the reactor, the pressure was returned to normal. pressure, and the generated polycarbonate resin was removed from the reactor. The content of phenol (PhOH) in the obtained polycarbonate resin was 100 ppm (mass ratio), and the content of DPC was 100 ppm (mass ratio). The physical properties of the obtained resin are summarized in Table 3 below.

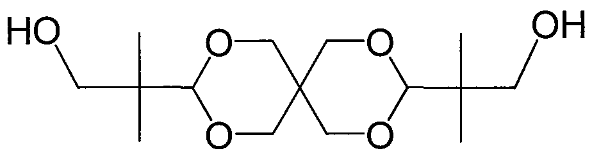

SPG

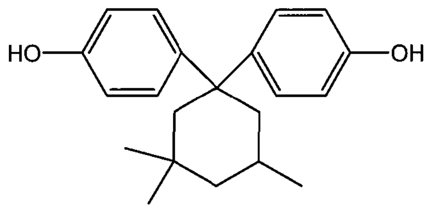

Bis-TMC

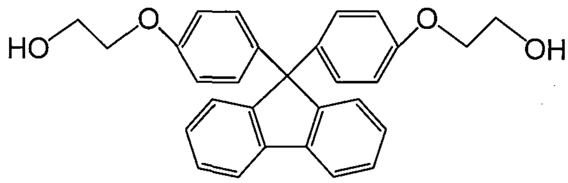

BPEF

(Examples 2 to 7 and Comparative Examples 1 to 4)

A polycarbonate resin was obtained in the same manner as that of Example 1, with the exception that the dihydroxy compounds used as raw materials were changed to the dihydroxy compounds (mol) shown in Table 3 below. The physical properties of the obtained resins are summarized in Table 3 below.

(Example 8)

Raw materials, namely, 2.00 mol of SPG (spiroglycol: 3,9-bis(1,1-dimethyl-2-hydroxyethyl)-2,4,8,10-tetraoxaspiro[5.5]undecane) represented by the above structural formula, 3.70 mol of Bis-TMC (1,1-bis(4-hydroxyphenyl)-3,3,5-trimethylcyclohexane) represented by the above structural formula, 4.30 mol of BPEF (9,9-bis[4-(2-hydroxyethoxy)phenyl]fluorene) represented by the above structural formula, 11.52 mol of DPC (diphenyl carbonate), and $1 \times 10^{-4}$ mol of sodium hydrogen carbonate were placed in a 25-L reactor equipped with a stirrer and a distillation device, and were then heated to 180°C under a 760 mmHg nitrogen atmosphere. Twenty minutes after initiation of the heating, it was confirmed that the raw materials were completely dissolved, and the resultant was further stirred under the same conditions as those described above for 110 minutes. Thereafter, the degree of pressure reduction was adjusted to 200 mmHg, and at the same time, the temperature was increased to 200°C at a rate of 60°C/hr. At this time, it was confirmed that phenol generated as a by-product started to be distillated. Thereafter, while the temperature was retained 200°C for 20 minutes, the reaction was carried out. Thereafter, the temperature was further increased to 230°C at a rate of 75°C/hr, and 10 minutes after termination of the temperature rise, the degree of pressure reduction was decreased to be 1 mmHg over 1 hour, while the reaction product was retained at the aforementioned temperature. Thereafter, the temperature was increased to 245°C at a rate of 60°C/hr, and then, the reaction product was further stirred for 30 minutes. After completion of the reaction, nitrogen was introduced into the reactor, the pressure was returned to normal. pressure, and the generated polycarbonate resin was removed from the reactor, while pelletizing it. The content of phenol (PhOH) in the obtained polycarbonate resin was 300 ppm (mass ratio), and the content of DPC was 150 ppm (mass ratio). The total light transmittance after the PCT test was 78%.

Furthermore, the pellets of the obtained polycarbonate resin were dried at 100°C for 4 hours, using a dryer. The dried pellets were mixed with additives, namely, with 1000 ppm of pentaerythritol-tetrakis[3-(3,5-di-tert-butyl-4-hydroxyphenyl)propionate] (AO-60, manufactured by ADEKA; an antioxidant), 1500 ppm of stearic acid monoglyceride (S-100A, manufactured by RIKEN VITAMIN CO., LTD.; a release agent), and 300 ppm of 3,9-bis(2,6-di-tert-butyl-4-methylphenoxy)-2,4,8,10-tetraoxa-3,9-diphosphaspiro[5.5]undecane (PEP-36, manufactured by ADEKA; an antioxidant), so that the additives were allowed to adhere to the dried pellets. Subsequently, while the pressure was reduced at 40 mmHg using a twin-screw extruder, the mixture was pelletized by melt kneading. The refractive index of the obtained polycarbonate resin composition was 1.583, the Abbe number thereof was 29, and the Tg thereof was 154°C. In addition, Mw was 30,000, and the b value was 1.0. Both the heat resistance and the molding cycle property of the obtained polycarbonate resin composition were evaluated to be A. Moreover, the content of phenol (PhOH) in the composition was 120 ppm (mass ratio), and the content of DPC was 100 ppm (mass ratio). Furthermore, the total light transmittance of the composition after the PCT test was 89%, and thus, the total light transmittance was improved by addition of the additives.

[Table 3]

| | Dihydroxy compounds | | | | | | | | | | | |
|---|---|---|---|---|---|---|---|---|---|---|---|---|
| | SPG mol | Bis-TMC mol | BPEF mol | SPG mol% | Bis-TMC mol% | BPEF mol% | Refractive index (nd) | Abbe number (v) | Tg | Mw | Heat resistance | Molding cycle property |
| Ex. 1 | 0.30 | 0.41 | 0.29 | 30 | 41 | 29 | 1.566 | 31 | 149 | 30000 | B | A |
| Ex. 2 | 0.09 | 0.41 | 0.50 | 9 | 41 | 50 | 1.598 | 27 | 160 | 28000 | A | B |
| Ex. 3 | 0.12 | 0.37 | 0.51 | 12 | 37 | 51 | 1.597 | 27 | 157 | 28000 | A | B |
| Ex. 4 | 0.20 | 0.37 | 0.43 | 20 | 37 | 43 | 1.585 | 29 | 152 | 30000 | A | A |
| Ex. 5 | 0.31 | 0.37 | 0.32 | 31 | 37 | 32 | 1.568 | 31 | 147 | 32000 | B | A |
| Ex. 6 | 0.21 | 0.29 | 0.50 | 21 | 1 29 | 50 | 1.590 | 28 | 148 | 34000 | B | A |
| Ex. 7 | 0.19 | 0.51 | 0.30 | 19 | 51 | 30 | 1.574 | 30 | 161 | 28000 | A | B |
| Ex. 8 | 0.21 | 0.33 | 0.46 | 21 | 33 | 46 | 1.583 | 29 | 154 | 30000 | A | A |
| Comp. Ex. 1 | 0.41 | 0.00 | 0.59 | 41 | 0 | 59 | 1.584 | 28 | 130 | 31000 | C | C |
| Comp. Ex. 2 | 0.00 | 0.46 | 0.54 | 0 | 46 | 54 | 1.606 | 26 | 168 | 29000 | C | C |
| Comp. Ex. 3 | 0.32 | 0.00 | 0.68 | 32 | 0 | 68 | 1.597 | 27 | 132 | 30000 | C | C |
| Comp. Ex. 4 | 0.30 | 0.70 | 0.00 | 30 | 70 | 0 | 1.534 | 36 | 170 | 30000 | C | C |

## Claims

**1.** A polycarbonate resin composition comprising a structural unit represented by the following formula (1), a structural unit represented by the following formula (2), and a structural unit represented by the following general formula (3), wherein the composition further comprises an antioxidant:

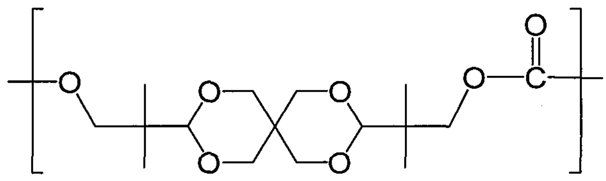

(1)

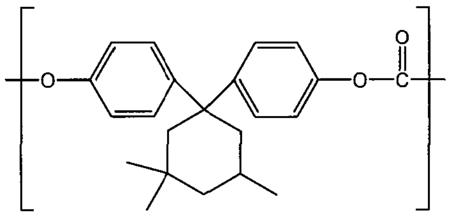

(2)

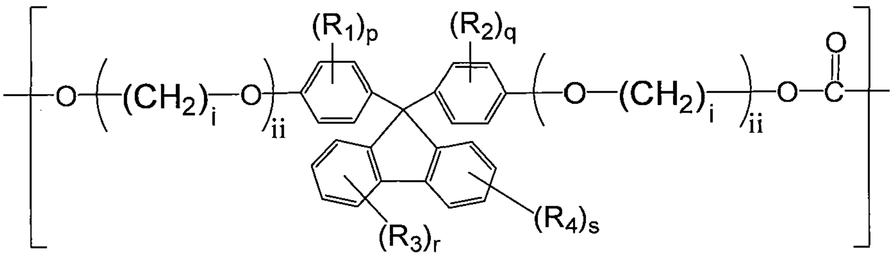

(3)

wherein, in the general formula (3), $R_1$ to $R_4$ each independently represent a hydrogen atom, a fluorine atom, a chlorine atom, a bromine atom, an iodine atom, an alkyl group containing 1 to 6 carbon atoms, or an aryl group containing 6 to 20 carbon atoms which may optionally comprise a heterocyclic atom selected from an oxygen atom, a nitrogen atom and a sulfur atom, an alkenyl group containing 2 to 6 carbon atoms, an alkoxy group containing 1 to 6 carbon atoms or an aralkyl group containing 7 to 17 carbon atoms;
p, q, r and s each independently represent an integer of 0 to 4; and
i represents an integer of 1 to 10, and ii represents an integer of 0 to 10.

**2.** The polycarbonate resin composition according to claim 1, wherein the antioxidant is comprised in an amount of 0.50% by mass or less in the polycarbonate resin composition.

**3.** The polycarbonate resin composition according to claim 1 or 2, wherein the antioxidant is comprised in an amount of 0.10% to 0.40% by mass in the polycarbonate resin composition.

**4.** The polycarbonate resin composition according to any one of claims 1 to 3, wherein the antioxidant is selected from the group consisting of triethylene glycol-bis[3-(3-tert-butyl-5-methyl-4-hydroxyphenyl)propionate], 1,6-hexanediol-bis[3-(3,5-di-tert-butyl-4-hydroxyphenyl)propionate], pentaerythritol-tetrakis[3-(3,5-di-tert-butyl-4-hydroxyphenyl)propionate], octadecyl-3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylenebis(3,5-di-tert-butyl-4-hydroxy-hydrocynnamide), 3,5-di-tert-butyl-4-hydroxy-benzylphosphonate-diethyl ester, tris(3,5-di-tert-butyl-4-hydroxybenzyl)isocyanurate, and 3,9-bis{1,1-dimethyl-2-[β-(3-tert-butyl-4-hydroxy-5-methylphenyl)propionyloxy]ethyl}-2,4,8,10-tetraoxaspiro(5,5)undecane.

**5.** The polycarbonate resin composition according to any one of claims 1 to 4, wherein the content of phenol in the polycarbonate resin contained in the polycarbonate resin composition is 0.1 to 3000 ppm, wherein the content of phenol is measured as specified in the description.

6. The polycarbonate resin composition according to any one of claims 1 to 5, wherein the content of carbonate diester in the polycarbonate resin contained in the polycarbonate resin composition is 0.1 to 1000 ppm.

7. The polycarbonate resin composition according to any one of claims 1 to 6, wherein (the structural unit (mole) represented by the formula (1)) / (the structural unit (mole) represented by the formula (1) + the structural unit (mole) represented by the formula (2) + the structural unit (mole) represented by the general formula (3)) $\times$ 100 is 8 to 32 mol%.

8. The polycarbonate resin composition according to any one of claims 1 to 7, wherein (the structural unit (mole) represented by the formula (2)) / (the structural unit (mole) represented by the formula (1) + the structural unit (mole) represented by the formula (2) + the structural unit (mole) represented by the general formula (3)) $\times$ 100 is 28 to 52 mol%.

9. The polycarbonate resin composition according to any one of claims 1 to 8, wherein (the structural unit (mole) represented by the general formula (3)) / (the structural unit (mole) represented by the formula (1) + the structural unit (mole) represented by the formula (2) + the structural unit (mole) represented by the general formula (3)) $\times$ 100 is 28 to 52 mol%.

10. The polycarbonate resin composition according to any one of claims 1 to 9, wherein the structural unit represented by the general formula (3) is:

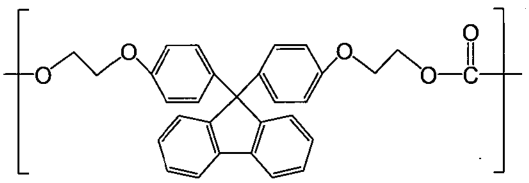
or
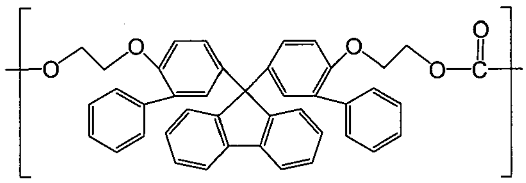

11. The polycarbonate resin composition according to any one of claims 1 to 10, wherein the glass transition temperature (Tg) is 140°C to 200°C.

12. The polycarbonate resin composition according to any one of claims 1 to 11, wherein the refractive index (nD) is 1.565 to 1.600 and the Abbe number (ν) is 26 to 32, wherein the parameters are measured as specified in the description.

13. The polycarbonate resin composition according to any one of claims 1 to 12, wherein the refractive index (nD) and the Abbe number (ν) satisfy the following relational expression:

$$-0.0130\ \nu + 1.9480 < nD < -0.0130\ \nu + 1.9900.$$

14. The polycarbonate resin composition according to any one of claims 1 to 13, wherein the weight average molecular weight (Mw) is 10,000 to 70,000, wherein the weight average molecular weight is measured as specified in the description.

15. An optical lens comprising the polycarbonate resin composition according to any one of claims 1 to 14.

16. The optical lens according to claim 15, which has a thickness of 0.01 to 30 mm.

## Patentansprüche

1. Polycarbonatharzzusammensetzung, umfassend eine durch die folgende Formel (1) dargestellte Struktureinheit, eine durch die folgende Formel (2) dargestellte Struktureinheit und eine durch die folgende allgemeine Formel (3) dargestellte Struktureinheit, wobei die Zusammensetzung ein Antioxidans umfasst:

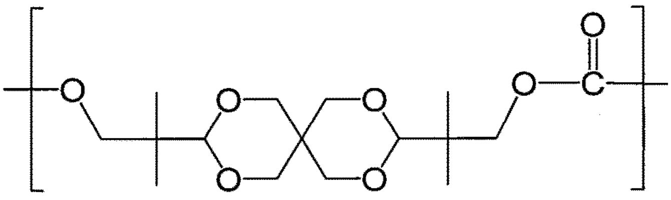

(1)

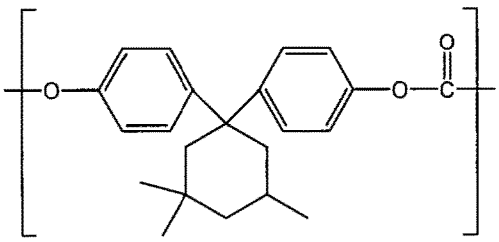

(2)

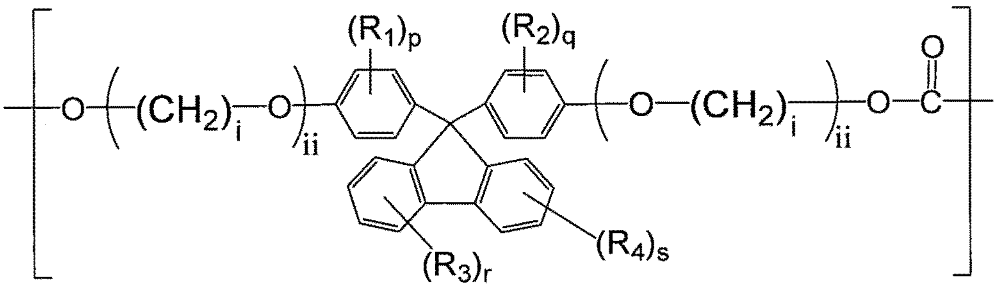

(3)

wobei in der allgemeinen Formel (3) $R_1$ bis $R_4$ jeweils unabhängig ein Wasserstoffatom, ein Fluoratom, ein Chloratom, ein Bromatom, ein Iodatom, eine 1 bis 6 Kohlenstoffatome enthaltende Alkylgruppe oder eine 6 bis 20 Kohlenstoffatome enthaltende Arylgruppe, die optional ein heterocyclisches Atom, ausgewählt aus einem Sauerstoffatom, einem Stickstoffatom und einem Schwefelatom, eine 2 bis 6 Kohlenstoffatome enthaltende Alkenylgruppe, eine 1 bis 6 Kohlenstoffatome enthaltende Alkoxygruppe oder eine 7 bis 17 Kohlenstoffatome enthaltende Aralkylgruppe umfassen kann, darstellen,
p, q, r und s jeweils unabhängig eine ganze Zahl von 0 bis 4 darstellen und
i eine ganze Zahl von 1 bis 10 darstellt und ii eine ganze Zahl von 0 bis 10 darstellt.

2. Polycarbonatharzzusammensetzung gemäß Anspruch 1, wobei das Antioxidans in einer Menge von 0,50 Masse-% oder weniger in der Polycarbonatharzzusammensetzung enthalten ist.

3. Polycarbonatharzzusammensetzung gemäß Anspruch 1 oder 2, wobei das Antioxidans in einer Menge von 0,10 bis 0,40 Masse-% in der Polycarbonatharzzusammensetzung enthalten ist.

4. Polycarbonatharzzusammensetzung gemäß einem der Ansprüche 1 bis 3, wobei das Antioxidans aus der Gruppe, bestehend aus Triethylenglykol-bis[3-(3-tert-butyl-5-methyl-4-hydroxyphenyl)propionat], 1,6-Hexandiol-bis[3-(3,5-di-tert-butyl-5-methyl-4-hydroxyphenyl)propionat], Pentaerythritol-tetrakis[3-(3,5-di-tert-butyl-4-hydroxyphenyl)propionat], Octadecyl-3-(3,5-di-tert-butyl-4-hydroxyphenyl)propionat, 1,3,5-Trimethyl-2,4,6-tris(3,5-di-tert-butyl-4-hydroxybenzyl)benzol, N,N-Hexamethylenbis(2,5-di-tert-butyl-4-hydroxyhydrocynnamid), 2,5-Di-tert-butyl-4-hydroxybenzylphosphonatdiethylester, Tris(3,5-di-tert-butyl-4-hydroxybenzyl)isocyanurat und 3,9-Bis{1,1-dimethyl-2-[β-(3-tert-butyl-4-hydroxy-5-methylphenyl)propionyloxy]ethyl}-2,4,8,10-tetraoxaspiro(5,5)undecan, ausgewählt ist.

5. Polycarbonatharz gemäß einem der Ansprüche 1 bis 4, wobei der Phenolgehalt in dem Polycarbonatharz, das in der Polycarbonatharzzusammensetzung enthalten ist, 0,1 bis 3.000 ppm beträgt, wobei der Phenolgehalt wie in der Beschreibung angegeben gemessen wird.

6. Polycarbonatharzzusammensetzung gemäß einem der Ansprüche 1 bis 5, wobei der Carbonatdiestergehalt in dem Polycarbonatharz, das in der Polycarbonatharzzusammensetzung enthalten ist, 0,1 bis 1.000 ppm beträgt.

**7.** Polycarbonatharzzusammensetzung gemäß einem der Ansprüche 1 bis 6, wobei (die Struktureinheit (Mol), dargestellt durch die Formel (1))/(die Struktureinheit (Mol), dargestellt durch die Formel (1) + die Struktureinheit (Mol), dargestellt durch die Formel (2) + die Struktureinheit (Mol), dargestellt durch die allgemeine Formel (3)) × 100 8 bis 32 mol-% beträgt.

**8.** Polycarbonatharzzusammensetzung gemäß einem der Ansprüche 1 bis 7, wobei (die Struktureinheit (Mol), dargestellt durch die Formel (2))/(die Struktureinheit (Mol), dargestellt durch die Formel (1) + die Struktureinheit (Mol), dargestellt durch die Formel (2) + die Struktureinheit (Mol), dargestellt durch die allgemeine Formel (3)) × 100 28 bis 52 mol-% beträgt.

**9.** Polycarbonatharzzusammensetzung gemäß einem der Ansprüche 1 bis 8, wobei (die Struktureinheit (Mol), dargestellt durch die allgemeine Formel (3))/(die Struktureinheit (Mol), dargestellt durch die Formel (1) + die Struktureinheit (Mol), dargestellt durch die Formel (2) + die Struktureinheit (Mol), dargestellt durch die allgemeine Formel (3)) × 100 28 bis 52 mol-% beträgt.

**10.** Polycarbonatharzzusammensetzung gemäß einem der Ansprüche 1 bis 9, wobei die durch die allgemeine Formel (3) dargestellte Struktureinheit

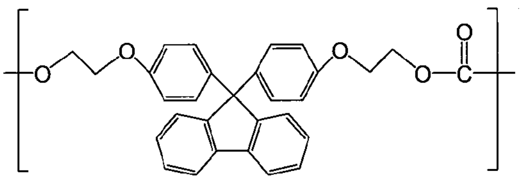
oder
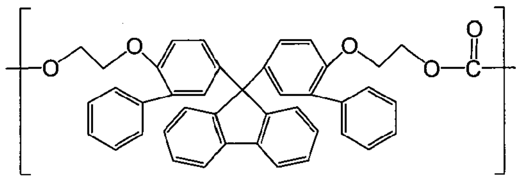

ist.

**11.** Polycarbonatharzzusammensetzung gemäß einem der Ansprüche 1 bis 10, wobei die Glasübergangstemperatur (Tg) 140°C bis 200°C beträgt.

**12.** Polycarbonatharzzusammensetzung gemäß einem der Ansprüche 1 bis 11, wobei der Brechungsindex (nD) 1,565 bis 1,600 beträgt und die Abbe-Zahl (ν) 26 bis 32 beträgt, wobei die Parameter wie in der Beschreibung angegeben gemessen werden.

**13.** Polycarbonatharzzusammensetzung gemäß einem der Ansprüche 1 bis 12, wobei der Brechungsindex (nD) und die Abbe-Zahl (ν) den folgenden Vergleichsausdruck erfüllen:

$$-0{,}0130\ \nu + 1{,}9480 < nD < -0{,}0130\ \nu + 1{,}9900.$$

**14.** Polycarbonatharzzusammensetzung gemäß einem der Ansprüche 1 bis 13, wobei das gewichtgemittelte Molekulargewicht (Mw) 10.000 bis 70.000 beträgt, wobei das gewichtsgemittelte Molekulargewicht wie in der Beschreibung angegeben gemessen wird.

**15.** Optische Linse, umfassend die Polycarbonatharzzusammensetzung gemäß einem der Ansprüche 1 bis 14.

**16.** Optische Linse gemäß Anspruch 15, die eine Dicke von 0,01 bis 30 mm aufweist.

## Revendications

**1.** Composition de résine de polycarbonate comprenant un motif de structure représenté par la formule (1) suivante, un motif de structure représenté par la formule (2) suivante, et un motif de structure représenté par la formule générale (3) suivante, dans laquelle la composition comprend en outre un antioxydant :

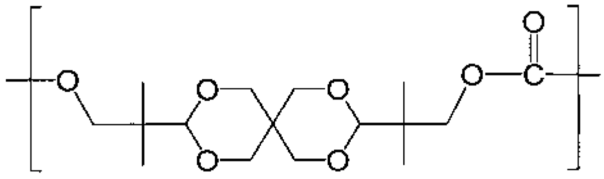
(1)

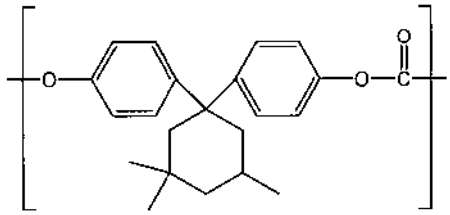
(2)

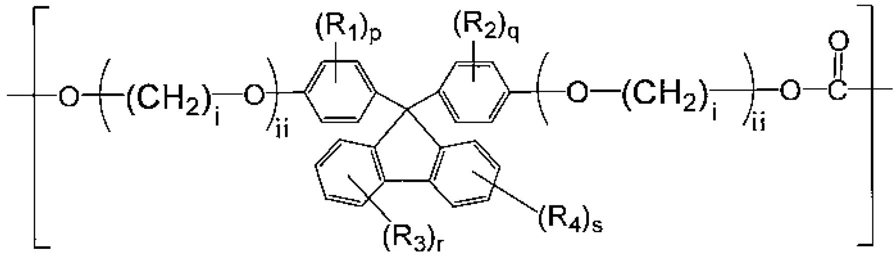
(3)

dans laquelle, dans la formule générale (3), $R_1$ à $R_4$ représentent chacun indépendamment un atome d'hydrogène, un atome de fluor, un atome de chlore, un atome de brome, un atome d'iode, un groupe alkyle contenant 1 à 6 atomes de carbone, ou un groupe aryle contenant 6 à 20 atomes de carbone qui peut facultativement comprendre un atome hétérocyclique sélectionné parmi un atome d'oxygène, un atome d'azote et un atome de soufre, un groupe alcényle contenant 2 à 6 atomes de carbone, un groupe alcoxy contenant 1 à 6 atomes de carbone ou un groupe aralkyle contenant 7 à 17 atomes de carbone ;
p, q, r et s représentent chacun indépendamment un nombre entier de 0 à 4 ; et
i représente un nombre entier de 1 à 10, et ii représente un nombre entier de 0 à 10.

**2.** Composition de résine de polycarbonate selon la revendication 1, dans laquelle l'antioxydant est compris en une quantité de 0,50% en masse ou moins dans la composition de résine de polycarbonate.

**3.** Composition de résine de polycarbonate selon la revendication 1 ou 2, dans laquelle l'antioxydant est compris en une quantité de 0,10% à 0,40% en masse dans la composition de résine de polycarbonate.

**4.** Composition de résine de polycarbonate selon l'une quelconque des revendications 1 à 3, dans laquelle l'antioxydant est sélectionné dans le groupe consistant en le triéthylène glycol-bis[3-(3-tert-butyl-5-méthyl-4-hydroxyphényl)propionate], le 1,6-hexanediol-bis[3-(3,5-di-tert-butyl-4-hydroxyphényl)propionate], le pentaérythritol-tétrakis[3-(3,5-di-tert-butyl-4-hydroxyphényl)propionate], l'octadécyl-3-(3,5-di-tert-butyl-4-hydroxyphényl)propionate, le 1,3,5-triméthyl-2,4,6-tris(3,5-di-tert-butyl-4-hydroxybenzyl)benzène, le N,N-hexaméthylénebis(3,5-di-tert-butyl-4-hydroxy-hydrocynnamide), l'ester de diéthyle du 3,5-di-tert-butyl-4-hydroxybenzyl-phosphonate, le tris(3,5-di-tert-butyl-4-hydroxybenzyl)isocyanurate, et le 3,9-bis{1,1-diméthyl-2-[β-(3-tert-butyl-4-hydroxy-5-méthylphényl)propionyloxy]éthyl}-2,4,8,10-tétraoxaspiro(5,5)undécane.

**5.** Composition de résine de polycarbonate selon l'une quelconque des revendications 1 à 4, dans laquelle la teneur en phénol dans la résine de polycarbonate contenue dans la composition de résine de polycarbonate est de 0,1 à 3000 ppm, dans laquelle la teneur en phénol est mesurée comme spécifié dans la description.

**6.** Composition de résine de polycarbonate selon l'une quelconque des revendications 1 à 5, dans laquelle la teneur en diester de carbonate dans la résine de polycarbonate contenue dans la composition de résine de polycarbonate est de 0,1 à 1000 ppm.

**7.** Composition de résine de polycarbonate selon l'une quelconque des revendications 1 à 6, dans laquelle (le motif de structure (mole) représenté par la formule (1)) / (le motif de structure (mole) représenté par la formule (1) + le motif de structure (mole) représenté par la formule (2) + le motif de structure (mole) représenté par la formule générale (3)) $\times$ 100 est de 8 à 32 % en mole.

**8.** Composition de résine de polycarbonate selon l'une quelconque des revendications 1 à 7, dans laquelle (le motif de structure (mole) représenté par la formule (2)) / (le motif de structure (mole) représenté par la formule (1) + le motif de structure (mole) représenté par la formule (2) + le motif de structure (mole) représenté par la formule générale (3)) $\times$ 100 est de 28 à 52 % en mole.

**9.** Composition de résine de polycarbonate selon l'une quelconque des revendications 1 à 8, dans laquelle (le motif de structure (mole) représenté par la formule générale (3)) / (le motif de structure (mole) représenté par la formule (1) + le motif de structure (mole) représenté par la formule (2) + le motif de structure (mole) représenté par la formule générale (3)) $\times$ 100 est de 28 à 52 % en mole.

**10.** Composition de résine de polycarbonate selon l'une quelconque des revendications 1 à 9, dans laquelle le motif de structure représenté par la formule générale (3) est :

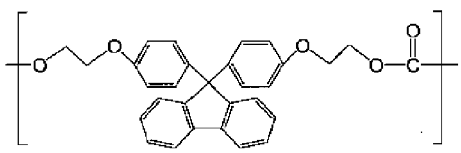

ou

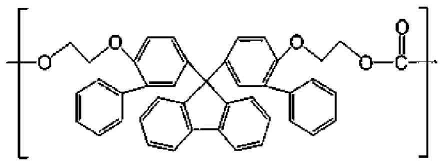

**11.** Composition de résine de polycarbonate selon l'une quelconque des revendications 1 à 10, dans laquelle la température de transition vitreuse (Tg) est de 140°C à 200 °C.

**12.** Composition de résine de polycarbonate selon l'une quelconque des revendications 1 à 11, dans laquelle l'indice de réfraction (nD) est de 1,565 à 1,600 et le nombre d'Abbe (v) est de 26 à 32, dans laquelle les paramètres sont mesurés comme spécifié dans la description.

**13.** Composition de résine de polycarbonate selon l'une quelconque des revendications 1 à 12, dans laquelle l'indice de réfraction (nD) et le nombre d'Abbe (v) satisfont à l'expression relationnelle suivante :

$$-0{,}0130\,\nu + 1{,}9480 < nD < -0{,}0130\,\nu + 1{,}9900.$$

**14.** Composition de résine de polycarbonate selon l'une quelconque des revendications 1 à 13, dans laquelle le poids moléculaire moyen en poids (Mw) est de 10 000 à 70 000, dans laquelle le poids moléculaire moyen en poids est mesuré comme spécifié dans la description.

**15.** Lentille optique comprenant la composition de résine de polycarbonate selon l'une quelconque des revendications 1 à 14.

**16.** Lentille optique selon la revendication 15, qui présente une épaisseur de 0,01 à 30 mm.

[Figure 1]

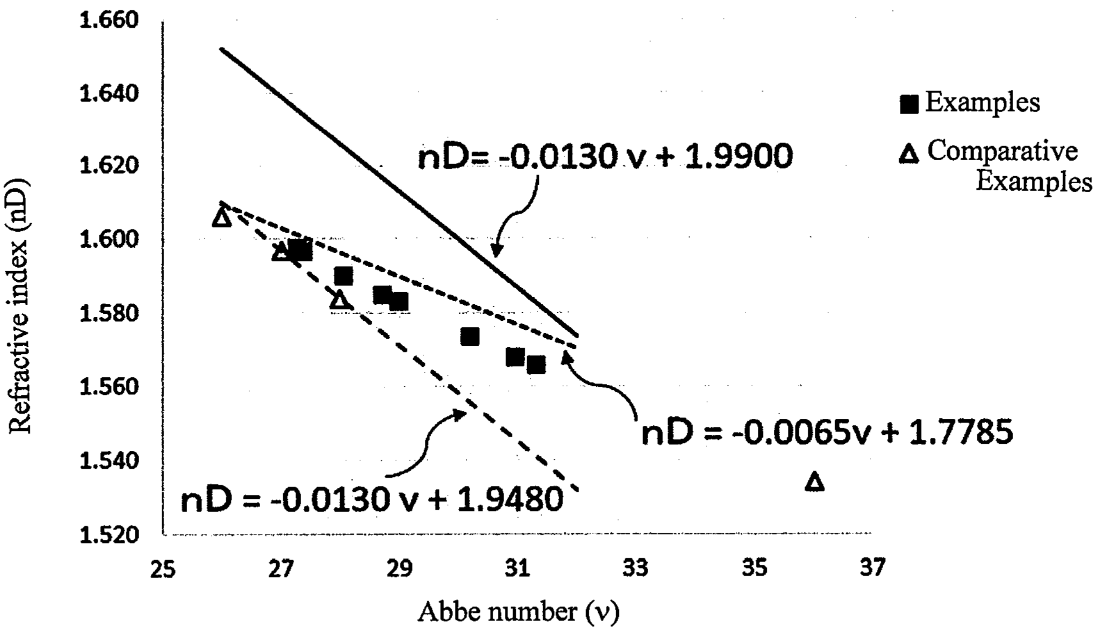
1.660
1.640
1.620
1.600
1.580
1.560
1.540
1.520
Refractive index (nD)
25
27
29
31
33
35
37
Abbe number (ν)
Examples
Comparative Examples
nD= -0.0130 v + 1.9900
nD = -0.0065v + 1.7785
nD = -0.0130 v + 1.9480

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2757394 A
- JP 1066234 A
- JP 10120777 A
- JP 11228683 A
- JP 11349676 A
- JP 2000063506 A
- WO 2018016516 A